Europäisches Patentamt

European Patent Office

Office européen des brevets

(11) Veröffentlichungsnummer: **0 245 661**

**A2**

(12) **EUROPÄISCHE PATENTANMELDUNG**

(21) Anmeldenummer: 87105386.4

(22) Anmeldetag: **11.04.87**

(51) Int. Cl.⁴: **G01M 3/28**

(30) Priorität: **11.04.86 CH 1441/86**

(43) Veröffentlichungstag der Anmeldung:
**19.11.87 Patentblatt 87/47**

(84) Benannte Vertragsstaaten:
**AT BE CH DE FR GB IT LI LU NL SE**

(71) Anmelder: **TEUFL, Wolfgang**
**Solothurnerstrasse 41**
**CH-4053 Basel(CH)**

(72) Erfinder: **TEUFL, Wolfgang**
**Solothurnerstrasse 41**
**CH-4053 Basel(CH)**

(74) Vertreter: **Eder, Carl E. et al**
**Patentanwaltsbüro EDER AG**
**Münchensteinerstrasse 2**
**CH-4052 Basel(CH)**

(54) Miteinander verspannte Druckprobegeräte für Kanalisationen zum Einbau über eine Einbauöffnung.

(57) Die Anwendung vorliegender Erfindung zur Druckprobe von Kanalleitungen durch Einführen der Absperrgeräte über nur eine Einbauöffnung findet vorwiegend zur Kontrolle von bestehenden Hausanschlussleitungen Verwendung.

Ein Absperrgerät wird in das Kanalrohr eingefahren und ist über die Druckprüfdistanz mit dem Anderen direkt verspannt.

Fig. 1

Die pneumatischen und verschraubbaren Absperrgeräte für Druckproben von Kanalleitungen erfordern zur Absperrung einer Strecke je eine separate Einbauöffnung und müssen einzeln verspriesst werden.

Der Vorteil der vorliegenden Erfindung gemäss Patentanspruch:

Der Gleitverschluss wird mit einem auf beliebige Länge zusammensetzbarem Gestänge von einer Einbauöffnung zum Beispiel von einem Schacht aus auf die gewünschte Distanz eingeschoben. Der End-Absperrdeckel wird über das Gestänge und die Druckluftleitung aufgezogen und in der Einbauöffnung der Rohrleitung als Abschluss durch verschrauben fixiert. Die Durchführung des Gestänges und der Druckluftleitung wird am End-Absperrdeckel fest verschraubt und abgedichtet. Der Schlauchmantel des Gleitverschlusses wird über die Zuleitung mit Druckluft gefüllt und an die Rohrwandung angepresst. Die somit abgesperrte Leitungsstrecke ist zur Druckprobe bereit und die Absperrgeräte miteinander verspriesst. Der gesamte Druckprüfvorgang erfolgt von der Einbauseite aus. Die Entleerung nach der Druckprüfung wird durch das Ablassen der Luft aus dem Schlauchmantel über den Gleitverschluss erreicht.

Die Aufgabe der Erfindung besteht darin, alte Hausanschlussleitungen von der Liegenschaft aus bis an den öffentlichen Kanal auf Dichtigkeit zu prüfen ohne eine zweite Einbauöffnung für ein Absperrgerät benützen zu müssen.

Wird der Gleitverschluss nach Anspruch 9 auf einen Kanalfernsehwagen aufgesetzt und in die Leitung eingebracht so erfolgt die Verspannung nach Anspruch 6.

Im folgenden wird die Erfindung durch nachstehende Beschreibung der in der Zeichnung dargestellten, Beispielsweisen Ausführungsform näher erläutert.

Es zeigt:

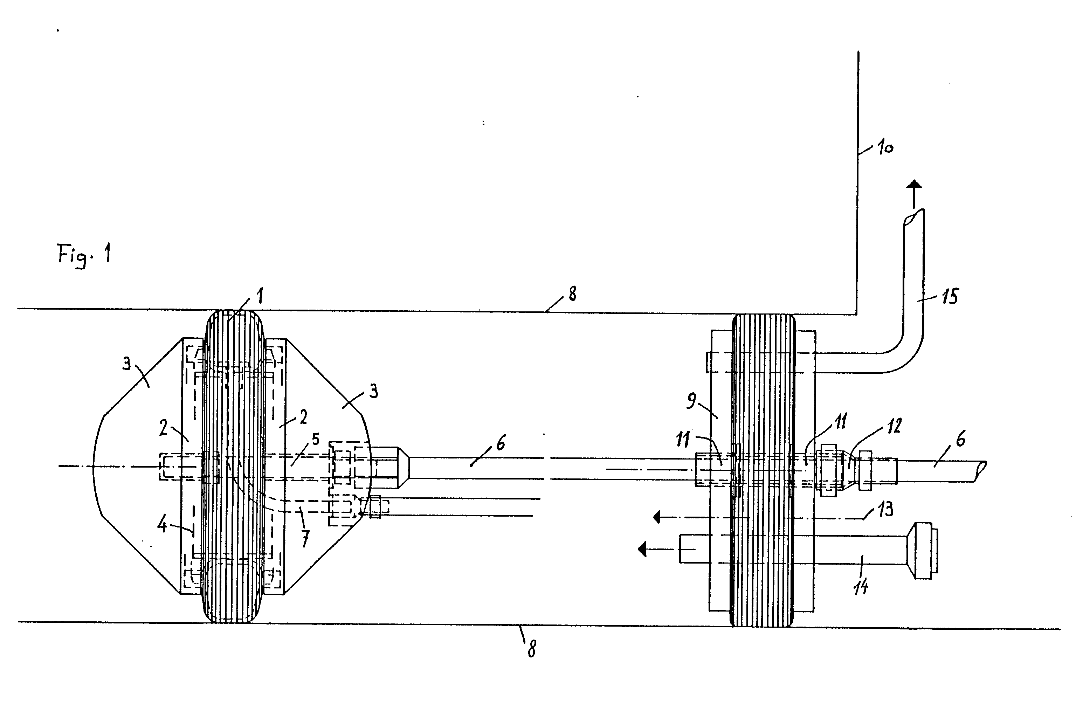

Fig. 1 das Druckprobegerät in der Seitenansicht und Einbaufolge, nähmlich vom Schacht aus mittels Gestänge in das Kanalrohr eingeführten Gleitverschluss und verbundenem End-Absperrdeckel.

den Gleitverschluss mit zwischenliegendem Schlauchmantel 1, die Scheiben 2 mit Gleitvorsätzen 3 sowie in die Scheiben eingelassenen Fixierring 4, die Montageschraube 5 mit angesetztem Einführgestänge 6 zur Verschlusseinführung und Verspannung sowie die Druckluftleitung 7 zur Anpressung des Schlauchmantels an die Kanalrohrwandung 8.

Den zusammenschraubbaren End-Absperrdeckel 9 als Rohrabschluss gegen den Schacht 10 mit Gestängedurchführung 11 und Klemm-Schraubdichtung 12, Druckluftdurchführung 13, Einfüllstutzen 14 und Entlüftungsrohr mit Messung 15.

**Ansprüche**

1. Miteinander verbundene Druckprobegeräte für Kanalisationen zum Einbau über eine Einbauöffnung Fig. 1 gekennzeichnet durch Stangenverspannung vom Kegelgleitverschluss zum End-Absperrdeckel über welchen die Leitungsfüllung, die Entlüftung und Messung sowie die Druckluftzufuhr erfolgt.

2. Druckprobegerät nach Patentanspruch dadurch gekennzeichnet, dass die Gleitvorsätze in Bügel-, Halbkugel- und Pyramidform vorgesehen ist.

3. Druckprobengerät nach Patentanspruch dadurch gekennzeichnet, dass anstatt des Schlauchmantels eine mechanische Gummiverspannung vorgesehen ist.

4. Druckprobegerät nach Patentanspruch dadurch gekennzeichnet, dass der Anpressmantel in Zwillingsausführung vorgesehen ist.

5. Druckprobegerät nach Patentanspruch dadurch gekennzeichnet, dass das Absperrgerät als Blasen-Ballonkörper vorgesehen ist.

6. Druckprobengerät nach Patentanspruch dadurch gekennzeichnet, dass anstatt dem Gestänge die Verspannung mit Kabel und Kette vorgesehen ist.

7. Druckprobengerät nach Patentanspruch dadurch gekennzeichnet, dass der End-Absperrdeckel pneumatisch vorgesehen ist.

8. Druckprobengerät nach Patentanspruch dadurch gekennzeichnet, dass der Anschluss des Gestänges auf den Gleitverschluss mit einem Gelenk vorgesehen ist.

9. Druckprobengerät nach Patentanspruch dadurch gekennzeichnet, dass der Gleitverschluss zum Aufsetzen auf einen selbstfahrenden Wagen vorgesehen ist.

10. Druckprobengerät nach Patentanspruch dadurch gekennzeichnet, dass der Gleitverschluss mit einer mechanischen Entleerungsöffnung vorgesehen ist.

Fig. 1